# EUROPEAN PATENT APPLICATION

(11) **EP 1 712 890 A2**
(43) Date of publication of application: **18.10.2006**
(21) Application number: 06075908.1
(22) Date of filing: 10.04.2006
(51) Int. Cl.: G01N 11/00

(54) **Rotational viscometer**

(30) Priority: 11.04.2005 ES 200500842
(71) Applicant: Millvision B.V., 4944 AC Raamsdonk (NL)
(72) Inventor: Blanco Suarez, Angeles, E-28040 Madrid (ES); Negro Alvarez, Carlos, E-28040 Madrid (ES); Tijero Miquel, Julio, E-28040 Madrid (ES); De La Rocha Echevarria, Félix, E-28040 Madrid (ES)
(74) Representative: ABG Patentes, S.L.

(57) **Abstract**

An equipment for measuring viscosity in any type of fluids, both in turbulent, and laminar flow, and especially in heterogeneous suspensions with the presence of large particles or fibres, mainly made up of a rotor formed by a shaft (1) with plates or baffles (2) of suitable dimensions, assembled on bearings (3) and driven by a variable speed motor (6), to which a torque measuring system (7) is associated in shaft (1) by means of an arm (8) joined to the rotating element, shaft (1) rotating inside a container or beaker (4) provided with uniformly distributed plates (5), assembled on another bearing (11) to allow its free rotation according to the torque forces transmitted by the fluid, with a torque measuring system (9) in beaker (4), related by means of an arm (10) joined to the same.

## Description

### Object of the Invention

The present invention relates to a rotational type viscometer, especially conceived for measuring viscosity in fluids or suspensions, be they Newtonian or not, which has important advantages when said viscosity is being measured in suspensions with a tendency to segregate particles and to anisotropy due to orientation under flow, which happens in the case of cellulose fibre pulps for example, making this measuring process difficult.

The object of the invention is to provide a new equipment for measuring the viscosity of fluids or suspensions both in laminar and turbulent flow, based on technological innovation entailing the measurement of shear stress both in the moving and in the stationary axis, allowing a reliable viscosity calculation from values that simulate momentum transport without having to resort to calibration with a standard fluid.

### Background of the Invention

There are currently many techniques for measuring viscosity but they can fundamentally be divided into two large groups: those in which the fluid circulates through a tube, channel or orifice, and those in which the fluid is subjected to a shear action between two moving surfaces.

Rotational viscometers are included in this second group; these are usually used for studying non-Newtonian fluids. These equipments allow studying the behaviour of samples under the action of shear forces by means of curves of shear stress versus rotational, speed of a moving element, which can be a cylinder, discs, bars, a cone, etc.

Their operation and action can be based on the Coutte principle or the Searle principle, depending on whether the fixed element of the physical apparatus is internal or external. They are basically formed by a container and a rotor, with concentric cylinders, plates, bars, etc., or of a cone-plate. In these, viscosity is measured from the torque necessary to produce a certain angular velocity, or from the angular velocity resulting from a certain torque.

But when viscosity is being measured in suspensions, these viscometers are not very suitable, mainly due to the presence of large particles or fibres in said suspensions, which can cause an effect of these with the rotor, so that the result obtained is the measurement of viscosity of the carrier fluid and not of the dispersion, which is what was realty intended.

A typical and specific example of this type of dispersions is cellulose fibres in water. In spite of the paper industry being mainly based on the transport of fibres in water, this means that very little is known about the viscosity of pulp suspensions as well as the relationship of said viscosity with the rest of the characteristics and conditions the pulp has during paper manufacturing.

Due to the heterogeneity of the suspensions and the tendency of fibres to flocculate and settle, stable three-dimensional networks are formed, so that for a consistency greater than 0.2%, (Duffy, G.G. and Titcener A.L. 1975) it is not possible to use currently existing commercial viscometers for their study given that the geometry and dimensions of the equipment affect the measurement such that the viscosity of the suspension, is close to that of water (McKennell, R., 1960; Gullishsen, J. and Harnöken, E., 1981).

In this way, when the viscosity of pulp suspensions is intended to be measured with a conventional rotational viscometer, there is a period when unstable values are obtained, after which these values are similar to the measurements obtained for pure water. This is due to the fact that the rotation of the measuring element causes an orientation of the fibres, which are arranged in a cylindrical area coaxial to the moving and fixed elements of the viscometer. Two laminar water films, virtually free of fibres, are created between the pulp accumulation area and the viscometer elements. In this way, the friction is between the viscometer surfaces and the laminar water films that are created, and not between the viscometer surfaces and the suspension.

In another sense, currently available conventional viscometers have another drawback because it is necessary to previously carry out an equipment calibration. Different standard solutions with known viscosity values are used to that end such that the torque measured in the rotor is related to the viscosity. Subsequently, the viscosity for any torque obtained with complex suspensions can be determined from said calibration curves.

### Description of the Invention

The rotational viscometer proposed by the invention satisfactorily solves the drawback previously set forth, in the different aspects discussed. It is a new equipment allowing the measurement of viscosity in any type of fluids, and especially in heterogeneous suspensions with the presence of large particles or fibres, the device being highly advantageous for determining the viscosity in any type of flow, thus preventing the segregation of suspensions. Although if said desegregation does not exist, the traditional viscosity can also be measured in laminar flow.

More specifically, the rotational viscometer proposed by the invention is materialized in an equipment formed mainly by a shaft with suitably sized plates or baffles assembled on bearings and driven by means of a variable speed motor, a torque measuring system in the shaft by means of an arm joined to the rotating element, a container or beaker provided with uniformly distributed plates, assembled on another bearing to allow its Free rotation according to the torque forces transmitted by the fluid, and a torque measuring system in the beaker by means of an arm joined to the same.

The torque measuring systems, both for the shaft and for the beaker, can be formed, for example, by a potentiometer, a load cell., a precision balance, or any other system with suitable characteristics allowing the evaluation in some way of the torque measurement of the rotor shaft, which acts as a starrer, and the torque measurement of the container or transmitted torque.

The operation of the described rotational viscometer is simple, as has been previously discussed, the equipment has a variable speed motor, allowing the measurement of shear stress at different stirring speeds. This motor is responsible for transmitting the suitable rotational speed to the rotor formed by a series of plates or baffles joined to a shaft.

The shaft rotates inside a container or beaker, intended for housing the sample object of analysis, and equipped with static plates, with similar features to those of said shaft, arranged in a suitable way for the purpose of increasing the surface area in contact, between the sample and the measuring elements, and preventing the formation of a fibre layer oriented towards the rotor shaft, which would give rise to the occurrence of a water layer between the plates and the suspension.

The stirring speed transmitted by the motor, which is necessary to maintain the homogeneity in suspensions with tendency to segregate or form aggregates or floccules, as in the case of suspensions formed by cellulose fibres, for example, depends on the rotor features, on the number and position of plates or baffles, on the beaker dimensions, on the sample particle size distribution, on the fibre density, on the pulp consistency and on the density and viscosity of water.

According to Newton's law, viscosity in turn is related to the shear stress and to the angular deformation velocity. In this sense, the technological innovation introduced in the rotational viscometer object of the invention is that the shear stress measurement is carried out both in the moving and stationary shafts, i.e., in the beaker, which is assembled on a bearing allowing its to free rotation and the measurement of the same, and in the stirring shaft. Therefore, the torque applied by the rotor and the torque transmitted by the fluid to the fixed element are measured such that the measurement of momentum transport is simulated.

This allows, after developing a relevant mathematical model, describing the variation in the speed profile as a function of the shear force applied to the fluid and measuring viscosity directly without having to resort to equipment calibration with standard fluids, of which the values, previously determined by commercial viscometers, are known. However, if desired, the equipment can also be calibrated for its validation.

Once the torque measurements have been recorded, and given that the motor which moves the stirring shaft has a variable speed and can be automatically regulated according to the way in which the equipment is programmed, the viscosity curves according to shear forces, commonly called rheograms, can be obtained while at the same time studies of flocculation according to said shear forces can be carried out as well as studying the effect of shear force on deflocculation and refloacculation phenomena, etc.

The previously described rotational viscometer can be optionally connected to a computer, so that motor speed regulation and data recording can be carried out automatically, thus allowing, for example, programming the construction of rheograms, studies of the variation of complex suspensions according to shear force, etc.

To sum up, the measurement of viscosity in laminar and turbulent flow, while virtually all equipment can only be used in laminar flow, adds a series of novel and advantageous possibilities to the equipment, thus the viscosity in turbulent flow of suspensions with a tendency to sedimentation of particles in suspension can be determined, preventing the sedimentation by stirring; another advantage is that the rotational speed transmitted by the motor to the rotor can be adjusted, thus preventing the occurrence of particle aggregates that falsify the measurement; or a study of the shear force necessary to break floccules can be carried out, etc.

That is, the rotational viscometer proposed by the invention, in addition to allowing obtaining reliable viscosity readings in complex dispersions, allows carrying out studies of the properties of said complex suspensions in laminar or turbulent flow conditions, and determining how said properties change according to the applied shear force.

### Description of the Drawings

To complement the description being made and with the aim of better understanding the features of the invention, according to a preferred embodiment thereof, a set of drawings is enclosed in said description in which the following is depicted in an illustrating and non-limiting way:

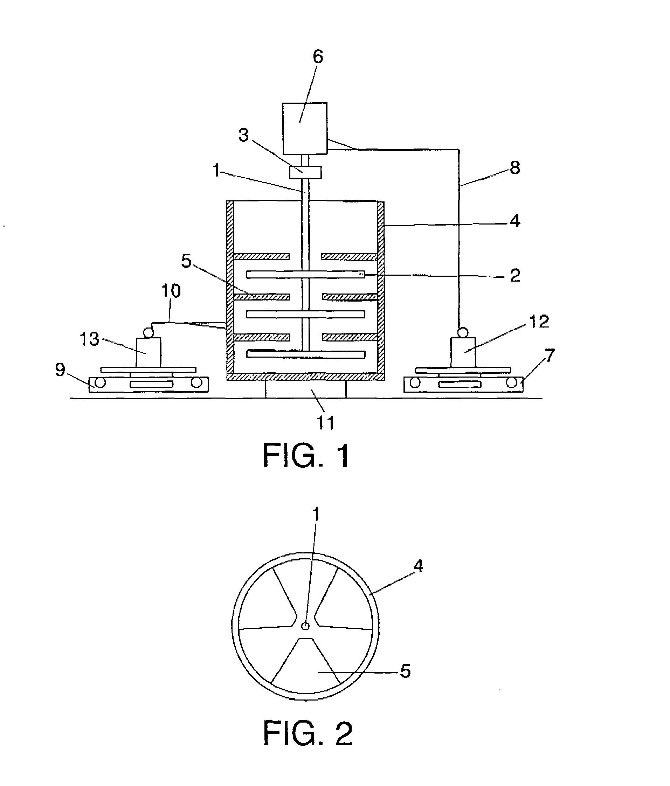

Figure 1 shows an elevational section view of a practical embodiment of the rotational viscometer object of the present invention, in which the different elements forming the equipment are shown.
Figure 2 shows a plan view of the rotational viscometer depicted in the previous figure.

### Preferred Embodiment of the Invention

In view of the figure shown, it can be observed that the rotational viscometer propose by the invention for measuring viscosity in any type of fluids and especially in those that tend to segregate, aggregate or flocculate, essentially made up of a rotor, formed by a shaft (1) to which a series of plates or baffles (2) are joined, said shaft-plates assembly being assembled on a support with bearings (3). Said shaft (1) rotates inside a container or beaker (4), to which another series of static plates (5) of features similar to the foregoing are integrally attached.

The system is driven by a variable speed motor (6), having the necessary features for the operation it has to carry out, that is, applying the suitable rotational speed to the rotor, thus, in the embodiment depicted in the drawings, for example, it is an electronically, analogically or digitally regulated electric motor.

The rotational viscometer is complemented by a torque measuring system (7) in the shaft (1), said torque measuring system (7) being linked to the shaft (1) by means or an arm (8) joined to the rotating element. In the same way, beaker (4) is provided with a torque measuring system (9), the torque being transmitted by means of an arm (10) joined to said beaker (4) .

The beaker or container (4) is assembled on a rotating disc bearing system (11), which allows it to rotate freely according to the torque forces transmitted by the fluid.

Both the moving plates (2) coupled to the shaft (1) and the static plates (5) joined to beaker (4) can vary in their number according to the required features; in the preferred embodiment said number of plates (2) and (5) is three, however, as has been discussed, this is optional and does not have to be limiting.

Specifically, said plates (2) and (5) depicted in the preferred embodiment are planar and thin, about 2 mm thick, with this the aim is to prevent the generation of momentum in the dispersion, the plates also having rounded edges to prevent the cutting of fibres or particles suspended in the fluid. Each one of them is formed by three 60° circular sectors, alternately arranged with three other similar empty sectors.

The fluid or suspension object of analysis is introduced inside the container or beaker (4) and the system is started up by means of the action of a motor (6), which is responsible for transmitting a rotational movement to the rotor (1), and accordingly to the plates (2) joined to it, thus causing the necessary stirring to maintain homogeneity in suspensions with a tendency to segregate or form aggregates or floccules.

The rotor (1) and plates (2) and (5) are manufactured from suitable materials, preferably from stainless steel, however this should not considered as limitating, and the material can be any that has similar features. The same occurs with the beaker (4), which will preferably be made of polymethacrylate but can be made of any other material which provides the required features.

Once the equipment is running and the suspension is perfectly homogenized, the relevant measurements will be taken to determine the viscosity of the sample, without having to calibrate the system by means of standard fluids with known viscosity values. In the case which is being described, the shear stress is measured both in the moving shaft (1) and in the beaker (4) or stationary shaft; as has been previously described, this is possible because said beaker (4) is assembled on a rotating disc bearing system (11) that allows it to rotate freely.

To that end, the rotational viscometer object of the present invention is provided, as has been previously set forth, with two measuring systems corresponding to a torque measuring system (7) in the shaft (1) and a torque measuring system (9) in the beaker (4); both are respectively linked to the shaft (1) and to the beaker (4) by means of transmitting arms (8) and (10) joined to them. The measuring system in question can be for example, a potentiomeler, a load cell, etc.

In the preferred embodiment of the invention, the measuring system in both the shaft (1) and the beaker (4) is materialized as a precision balance. In this way, the torque measurement in the shaft (1) is carried out by recording on a precision balance (7), associated to motor (6) which drives shaft (1), the weight variation in a mass (12) connected to a torque arm (8) or transmitter joined to motor (6), to thus compensate its rotational torque in an opposite direction to the rotor. In the case of the torque measurement in the beaker (4), this is also carried out by recording in a balance (9) the weight variation in a mass (13) connected to the arm (10), joined to the beaker (4) to compensate its rotational torque.

In this way, the equipment measures the torque applied by the rotor (1) and the torque transmitted through the fluid to the fixed element (4) such that the measurement, of momentum transport is simulated, the obtained values of which allow calculating the viscosity without having to resort to calibration with a standard fluid.

Both the speed regulation of the motor (6) and data recording can be carried out automatically with the collaboration of a computer connected to the equipment. This allows programming the construction of rheograms, studying the effect of shear force on flocculation phenomena or carrying out studies in the variation of complex suspensions according to shear force, among other applications.

The curve of shear stress or force versus the variation in gradient speed can be constructed by means of a mathematical relationship that allows describing the variation in the speed profile according to the shear stress applied to the fluid. Values of shear stress are given by the measurement of torque applied by the rotor (1) and the torque received by the beaker (1) by means of the differences in weights on the two precision balances (7) and (9). The measurements are recorded continuously on the computer by using a suitable program. The mathematical processing of the data and the interpretation of the results obtained in the measurements are subsequently carried out.

The rotational viscometer proposed by the invention, in a non-limiting way, is especially indicated for working with suspensions, for example, cellulose suspensions, for measuring viscosity in paper pulps of any consistency, and more specifically in those the consistency of which is greater than 0.2%.

To break the three dimensional network formed by cellulose fibres in a typical suspension with 2% consistency, a 260 s⁻¹ angular velocity is necessary, likewise, the shear stress is 8 N+m⁻² and the torque is 0.015 5 N·m, so the rotational viscometer design, the radius of plates (2) and (5), the diameter and the height of the container (4) or the height of the rotor (1) will have to be adapted.

## Claims

1. A rotational viscometer, especially devised for measuring the viscosity of any type of fluids and suspensions, Specifically non-Newtonian fluids, and more specifically, in those that tend to segregate, aggregate, flocculate or orient themselves under flow, such as cellulose suspensions, **characterized in that** it is made up of a rotor, formed by a shaft (1), to which a series of plates or baffles (2) are joined, said shaft. (1) being driven by a motor (6) allowing its rotation inside a container or beaker (4), to which another series of static plates (5) of similar features to the foregoing are integrally attached, the equipment being complemented by a torque measuring system (7) for the shaft (1), and another torque measuring system (9) for the beaker (4) .

2. A rotational viscometer according to claim 1, **characterized in that** said shaft. (1) - plates (2) assembly is coupled to a support with bearings (3), whereas the beaker or container (4) is assembled on another bearing system (11), which will allow it to rotate freely according to the torque forces transmitted by the fluid.

3. A rotational viscometer according to the previous claims, **characterized in that** the motor (6) used to drive shaft (1) is a variable speed motor, preferably being an electronically, analogically or digitally regulated electric motor.

4. A rotational viscometer according to the previous claims, **characterized in that** the torque measuring systems (7) and (9), both for the shaft (1) and the beaker (4), are materialized as a potentiometer, a load cell, a precision balance or any other system with suitable features which allows assessing the torque measurement of the rotor shaft (1), which acts as a stirrer, and of the container (4) or transmitted torque, such that the measurement of transported momentum is simulated, obtaining values that allow calculating viscosity without having to resort to calibration with a standard fluid.

5. A rotational viscometer according to claim 4, **characterized in that** the torque measuring system, both for the shaft.(1) and the beaker (4) is preferably a precision balance (7) and (9) respectively, connected, in one case, to the shaft. (1) and in the other case, to the beaker (4) by means of respective torque arms or transmitters (8) and (10), which record in said balances (7) and (9) the mass variation in respective weights (12) and (13) connected to arms (8) and (10), so that they compensate their rotational torque.

6. A rotational viscometer according to the previous claims, **characterized in that** a computer collaborates with the equipment, allowing the regulation of motor speed and data recording to be automatic, and allowing, among other applications, programming the construction of rheograms, carrying out studies in the variations of complex suspensions according to shear force or studying the effect of shear force on flocculation phenomena.
